# EUROPÄISCHE PATENTSCHRIFT

(11) **EP 3 486 115 B1**
(45) Veröffentlichungstag und Bekanntmachung des Hinweises auf die Patenterteilung: **22.09.2021**
(21) Anmeldenummer: 18206789.2
(22) Anmeldetag: 16.11.2018
(51) Int. Cl.: B60N 2/75

(54) **AUSSTATTUNGSVORRICHTUNG DES FAHRZEUGINNENRAUMS**
VEHICLE INTERIOR FEATURE
DISPOSITIF D'EQUIPEMENT POUR HABITACLE DE VÉHICULE

(30) Priorität: 16.11.2017 DE 102017010592
(43) Veröffentlichungstag der Anmeldung: 22.05.2019
(73) Patentinhaber: GRAMMER AG, 92289 Ursensollen (DE)
(72) Erfinder: Stuiber, Martin, 92551 Stulln (DE); Kotz, Maximilian, 92286 Rieden (DE)
(74) Vertreter: Roche, von Westernhagen & Ehresmann

(56) Entgegenhaltungen:
- DE-A1- 10 214 469
- DE-A1- 10 338 414
- DE-A1-102004 055 569
- DE-U1-202006 009 880

## Beschreibung

Ausstattungsvorrichtung des Fahrzeuginnenraums mit Bremsvorrichtung und Verwendung einer Bremsvorrichtung für ein Ausstattungsteil des Fahrzeuginnenraums

Die Erfindung betrifft eine Ausstattungsvorrichtung des Fahrzeuginnenraums. Fahrzeug ist im Sinne der Erfindung ein Land-, Luft- oder Wasserfahrzeug.

Die DE 100 08 952 A1 beschreibt eine Armlehne mit einem Schwenkkraftkonstanter.

Aus der DE 102 14 469 A1 ist eine Armlehne mit einer Überlastkupplung bekannt. Auf einer Drehachse der Armlehne sind ein erstes armauflagefestes Klemmelement und ein zweites fahrzeugfestes Klemmelement angeordnet. Aufgrund des Reibschlusses zwischen den Klemmelementen wird die Armauflage in der eingestellten und verriegelten Position gehalten. Eine Verstellung der Armlehne wird über eine lösbare Verriegelung vorgenommen. Bei Überlast kommt es zu einem Schlupf zwischen den beiden Klemmelementen.
DE 103 38 414 A1 und DE 20 2006 009880 U1 zeigen weitere Ausstattungsvorrichtungen aus dem Stand der Technik.

Es war Aufgabe der Erfindung eine Ausstattungsvorrichtung mit einem schwenkbaren Teil zu schaffen, bei welchem das schwenkbare Teil von einer Vorrichtung derart gebremst wird, dass es sich bei einem Schwenkvorgang von einer ersten Endposition in eine zweite Endposition verlangsamt in die zweite Endposition bewegt. Die entgegengesetzte Bewegung soll hingegen leichtgängig erfolgen.

Die Aufgabe wird gelöst mit einer Ausstattungsvorrichtung mit den Merkmalen des Anspruchs 1.

Die Ausstattungsvorrichtung umfasst eine Basis und ein relativ zu der Basis um eine Schwenkachse zwischen einer ersten Endposition und einer zweiten Endposition schwenkbares Teil.

Die Ausstattungsvorrichtung umfasst eine Bremsvorrichtung mit wenigstens einer der Basis zugeordneten ersten Gleitfläche und wenigstens einer der Armauflage zugeordneten zweiten Gleitfläche. Die zweite Gleitfläche ist mit der Armauflage bewegungsverbunden. Die erste Gleitfläche und die zweite Gleitfläche stehen wenigstens teilweise in Kontakt. Die erste Gleitfläche ist einer ersten Gleitstruktur und die zweite Gleitfläche ist einer zweiten Gleitstruktur zugeordnet. Die erste Gleitstruktur und die zweite Gleitstruktur können z.B. jeweils mehr als eine Gleitfläche aufweisen.

Die erste Gleitfläche und / oder die zweite Gleitfläche sind wenigstens teilweise als Rampe ausgebildet. Dass bedeutet, dass sie von einem unteren Niveau, das im Folgenden als Nullniveau bezeichnet wird, z.B. in einer Richtung parallel zu der Schwenkachse und zu der anderen Gleitstruktur hin ansteigt. Der Anstieg kann konstant sein oder alternativ nicht konstant, d.h. zu- bzw. abnehmend sein. Die Rampe kann alternativ auch konstante und nicht konstante Abschnitte aufweisen. Die Rampe kann z.B. lediglich einen Bereich der Gleitfläche ausbilden. Alternativ kann die Gleitfläche z.B. ausschließlich als Rampe ausgebildet sein.

Bei einer Bewegung des schwenkbaren Teils in eine erste Richtung, wobei sich ein Vorsprung einer Gleitstruktur die Rampe der anderen Gleitstruktur hinaufbewegt, wirkt die Hangabtriebskraft der Bewegung entgegen, so dass das schwenkbare Teil gebremst wird. Bei der Bewegung des schwenkbaren Teils in eine zweite, der ersten Richtung entgegengesetzten Richtung, wird der Vorsprung die Rampe hinunterbewegt, wobei die Hangabtriebskraft die Bewegung unterstützt. Ist das schwenkbare Teil z.B. eine Armauflage, kann sich der Vorsprung bei einer Bewegung der Armauflage von einer etwa vertikalen Position in eine etwa horizontale Position, die Rampe hinaufbewegen und bei einer Bewegung von einer etwa horizontalen Position in eine etwa vertikale Position die Rampe hinabbewegen.

Die erste Gleitstruktur und / oder die zweite Gleitstruktur umfasst z.B. wenigstens zwei Gleitflächen. Damit wird eine stabile Konstruktion gewährleistet und ein Kippen vermieden. Die erste Gleitstruktur und / oder die zweite Gleitstruktur umfasst z.B. drei Gleitflächen.

Wenigstens eine der Gleitflächen weist z.B. wenigstens einen bezüglich des Nullniveaus vorragenden Vorsprung auf. Der Vorsprung ist z.B. der maximal vorragende Teil der Gleitfläche. Der Vorsprung steht z.B. mit der Gleitfläche der jeweils anderen Gleitstruktur in Kontakt. Ist der Vorsprung z.B. Teil der ersten Gleitfläche, steht er mit der zweiten Gleitfläche in Kontakt.

Die erste Gleitfläche und / oder die zweite Gleitfläche bildet eine Gleitbahn, die während der Bewegung der Armauflage zwischen der ersten Endposition und der zweiten Endposition von dem Vorsprung der jeweils anderen Gleitfläche abgefahren wird. Die Gleitbahn wenigstens einer der Gleitstrukturen kann z.B. ein Nullniveau und / oder eine Rampe und / oder einen Vorsprung einschließen.

In einem ersten Bereich der Bewegung des schwenkbaren Teils steht z.B. der Vorsprung einer Gleitfläche mit dem Nullniveau einer anderen Gleitfläche in Kontakt. Mit anderen Worten, der Vorsprung einer Gleitstruktur und das Nullniveau der anderen Gleitstruktur befinden sich in einer geschachtelten Anordnung. In diesem Bereich ist die Reibkraft unter der Voraussetzung einer konstanten Kraft der Federvorrichtung konstant.

In einem zweiten Bereich der Bewegung der Armauflage kontaktiert z.B. der Vorsprung wenigstens einer Gleitfläche einer Gleitstruktur eine Rampe wenigstens einer Gleitfläche der anderen Gleitstruktur. In diesem Bereich der Gleitbahn ist die Reibkraft unter der Voraussetzung einer konstanten Kraft der Federvorrichtung konstant, wenn die Rampe eine konstante Steigung aufweist. Die Reibkraft ist aber in Bezug auf den ersten Bereich größer. Die Reibkraft kann ansteigend oder abnehmend sein, wenn die Rampe keine konstante Steigung aufweist.

In einem dritten Bereich der Bewegung der Armauflage kontaktieren sich z.B. die Vorsprünge der Gleitflächen der ersten und der zweiten Gleitstrukturen. In diesem Bereich ist die Reibkraft unter der Voraussetzung einer konstanten Kraft der Federvorrichtung konstant.

Die Rampen erstrecken sich z.B. zwischen dem Nullniveau und dem Vorsprung der ersten und / oder der zweiten Gleitfläche.

Die Bremsvorrichtung umfasst eine Federvorrichtung, welche die erste und zweite Gleitfläche gegeneinander belastet. Der Federweg, d.h. die Auslenkung der Federvorrichtung, ist proportional zu einer Federkraft der Federvorrichtung, welche auf die Gleitflächen wirkt und die Reibkraft zwischen der ersten Gleitfläche und der zweiten Gleitfläche beeinflusst. Die Federvorrichtung kann eine oder mehrere Federn aufweisen.

Die Federvorrichtung kann so ausgebildet sein, dass die Federkraft bei zunehmendem Federweg ansteigt. Gemäß einer Alternative kann die Federvorrichtung derart ausgebildet sein, dass die Federkraft bei zunehmendem Federweg nur vernachlässigbar ansteigt. Die Federkraft kann dann als konstant angenommen werden.

Die Armlehne umfasst z.B. eine Steuervorrichtung zur Steuerung des Federwegs der Federvorrichtung. Die Steuervorrichtung weist mit der Armauflage verbundene erste Steuerstrukturen mit wenigstens einer ersten Steuerfläche und bezüglich der Basis drehfeste, axial verschiebbare zweite Steuerstrukturen mit wenigstens einer zweiten Steuerfläche auf, die mit der ersten Steuerfläche zusammenwirkt. In diesem Zusammenhang kann das Merkmal "axial verschiebbar" z.B. bedeuten, dass die zweiten Steuerstrukturen in eine Richtung parallel zu der Schwenkachse verschiebbar sind.

Die Steuervorrichtung steuert z.B. den Federweg der Federvorrichtung in Abhängigkeit der Schwenkposition des schwenkbaren Teils derart, dass sich in dem zweiten Bereich der Bewegung des schwenkbaren Teils die Federkraft der Federvorrichtung erhöht, wenn das schwenkbare Teil in eine erste Richtung bewegt wird und verringert, wenn das schwenkbare Teil in eine zweite, der ersten Richtung entgegengesetzte Richtung bewegt wird.

Gemäß einer Ausgestaltung der Erfindung bildet die erste Gleitfläche wenigstens teilweise die erste Steuerfläche und die zweite Gleitfläche wenigstens teilweise die zweite Steuerfläche aus. Die erste Gleitstruktur ist zugleich die erste Steuerstruktur und die zweite Gleitstruktur ist zugleich die zweite Steuerstruktur. Mit anderen Worten, die erste Gleitfläche und die zweite Gleitfläche sind derart ausgestaltet, dass sie auch mit einer Steuerfunktion versehen sind.

Die Steuerfunktion erhalten die erste Gleitfläche und die zweite Gleitfläche z.B. dadurch, dass die erste Gleitfläche und / oder die zweite Gleitfläche in eine Richtung parallel zu der Schwenkachse als Rampe ausgebildet sind, die unterschiedliche Niveaus aufweist, d.h., dass sie entlang der Gleitbahn bzgl. einem Nullniveau unterschiedlich weit vorspringt oder zurückverläuft.

Die Steuervorrichtung umfasst z.B. ein Stellelement, welchem die erste oder die zweite Steuerstruktur zugeordnet ist und welches mit der Federvorrichtung zusammenwirkt. Die Steuerstruktur ist z.B. an dem Stellelement ausgebildet oder daran befestigt. Ist wenigstens eine der Gleitstrukturen zugleich Steuerstruktur, dann ist z.B. die Gleitstruktur dem Stellelement zugeordnet.

In dem ersten Bereich der Bewegung des schwenkbaren Teils ist der von dem Stellelement auf die Federvorrichtung übertragene Federweg am geringsten. In dem zweiten Bereich, in welchem die Vorsprünge mit den Rampen in Kontakt stehen, bewegt sich das Stellelement zunehmend gegen die Federvorrichtung, so dass der Federweg sich vergrößert. In dem dritten Bereich, in welchem die Vorsprünge der ersten und zweiten Gleitstruktur in Kontakt stehen, ist die Federvorrichtung von dem Stellelement am weitesten ausgelenkt und der Federweg ist am größten.

Das Stellelement ist z.B. von dem schwenkbaren Teil gebildet. Das schwenkbare Teil wird z.B. von der Steuervorrichtung in Abhängigkeit der Position der Armauflage derart axial relativ zu einer einseitig fest gelagerten Federvorrichtung bewegt, dass der Federweg und damit die Federkraft zu- oder abnimmt.

Die Steuerflächen sind z.B. koaxial zu der Schwenkachse angeordnet.

Auch die Gleitflächen bzw. die Gleitbahnen sind z.B. koaxial zu der Schwenkachse angeordnet.

Die erste Gleitfläche und die zweite Gleitfläche sind z.B. bzgl. einer Achse, die parallel zu der Schwenkachse ist, gegenüberliegend angeordnet.

Die Ausstattungsvorrichtung bildet z.B. eine Armlehne, wobei das schwenkbare Teil eine zwischen einer etwa vertikalen Position und einer etwa horizontalen Position schwenkbare Armauflage ist. Die Armlehne ist für einen Sitz bestimmt. Das kann z.B. ein Fahrzeugsitz sein. Die Armlehne kann unmittelbar an dem Sitz befestigt sein. Alternativ kann sie aber auch an einer von dem Sitz separaten Struktur befestigt und in der Nähe des Sitzes angeordnet sein. Z.B. kann die Armlehne Teil einer zwischen Fahrzeugsitzen angeordneten Konsole sein. In der oberen Endposition ist eine Längsachse der Armauflage z.B. etwa vertikal ausgerichtet ist und in der unteren Endposition ist die Längsachse etwa horizontal ausgerichtet.

Die Erfindung betrifft gemäß einem zweiten Aspekt auch die Verwendung einer Bremsvorrichtung. Um Wiederholungen zu vermeiden wird hinsichtlich der Merkmale der Bremsvorrichtung, insbesondere hinsichtlich der Merkmale der Steuerstrukturen und Steuerflächen und der Gleitstrukturen und Gleitflächen sowie der Federbelastung auf die Ausführungen zu dem ersten Aspekt der Erfindung und auf die Unteransprüche 2 bis 12 verwiesen, die gleichermaßen auch für den zweiten Aspekt der Erfindung gelten.

Weitere Vorteile der Erfindung ergeben sich anhand der Beschreibung eines in den schematischen Fig. dargestellten Ausführungsbeispiels. Es zeigen:
Fig. 1 eine Seitenansicht der Armlehne, wobei eine Armauflage in einer oberen Endposition angeordnet ist,
Fig. 2 eine Seitenansicht der Armlehne, wobei die Armauflage in einer unteren Endposition angeordnet ist,
Fig. 3 eine Seitenansicht der Armlehne, wobei ein Polster der Armauflage nicht dargestellt ist und wobei ein Tragarm der Armauflage in der oberen Endposition angeordnet ist,
Fig. 4 in Anlehnung an Fig. 3 eine Seitenansicht der Armlehne, wobei ein Tragarm der Armauflage in einer Zwischenposition zwischen der oberen Endposition und der unteren Endposition angeordnet ist,
Fig. 5 in Anlehnung an Fig. 3 eine Seitenansicht der Armlehne, wobei ein Tragarm der Armauflage in der unteren Endposition angeordnet ist,
Fig. 6 eine rückwärtige Darstellung der Armlehne, wobei sich der Tragarm in der oberen Endposition befindet,
Fig. 7 eine vergrößerte Darstellung des Ausschnittes gemäß Ausschnittlinie VII in Fig. 6,
Fig. 8 eine perspektivische Einzelteildarstellung eines Gleitelements der Bremsvorrichtung mit einer Gleitstruktur,
Fig. 9 eine Frontdarstellung des Gleitelements der Basis gemäß Fig. 8,
Fig. 9a eine Frontdarstellung eines Gegenelements der Armauflage,
Fig. 9b eine rückwärtige Ansicht des Gegenelements, wobei die Reibstruktur gestrichelt dargestellt ist,
Fig. 10 eine Prinzipskizze einer Rampe mit einem auf der schiefen Ebene befindlichen Körper,
Fig. 11 eine Schnittdarstellung gemäß Schnittlinie XI - XI in Fig. 3, Fig. 12 in Anlehnung an Fig. 6 eine rückwärtige Darstellung der Armlehne, wobei sich der Tragarm in der unteren Endposition befindet,
Fig. 13a eine rückwärtige Ansicht des Gegenelements gemäß Fig. 9b, wobei die Gegenstruktur entsprechend dem maximalen Schwenkwinkel des Tragarms um den Winkel β in Bezug auf Fig. 9b geschwenkt ist,
Fig. 13b eine Darstellung des Gleitelements gemäß Fig. 9,
Fig. 13c eine Ansicht der zusammenwirkenden Gleitstrukturen in der unteren Endposition des Tragarms.

Eine Armlehne insgesamt ist in den Fig. mit dem Bezugszeichen 10 bezeichnet. Gleiche Bezugszeichen in den unterschiedlichen Fig. bezeichnen entsprechende Teile, auch wenn kleine Buchstaben hinzugefügt oder weggelassen sind.

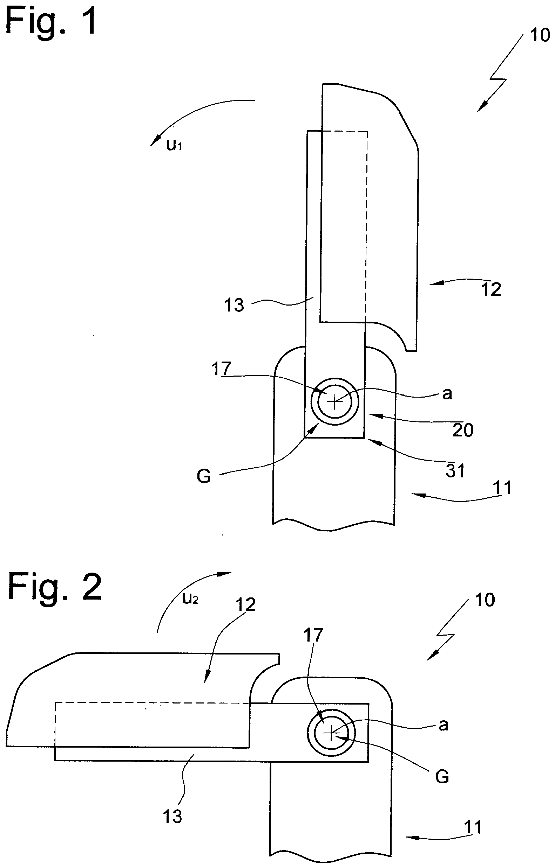

Die Armlehne 10 umfasst gemäß der Fig. 1 und 2 eine Basis 11 und eine relativ zu der Basis 11 um eine Schwenkachse a zwischen einer oberen Endposition und einer unteren Endposition schwenkbare Armauflage 12 mit einem Tragarm 13. Der Tragarm 13 bildet das schwenkbare Teil im Sinne der Erfindung. In der oberen Endposition ist eine Längsachse m der Armauflage 12 etwa vertikal ausgerichtet und in der unteren Endposition ist die Längsachse m etwa horizontal ausgerichtet. Die untere Endposition ist z.B. eine Gebrauchsposition und die obere Endposition ist z.B. eine Nichtgebrauchsposition.

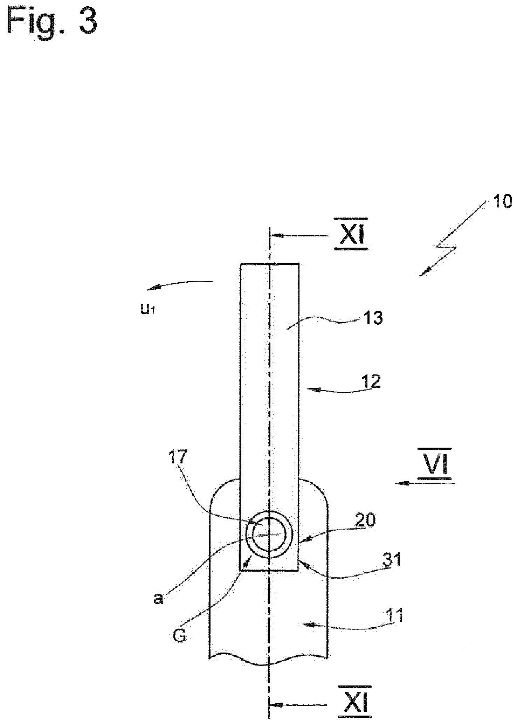

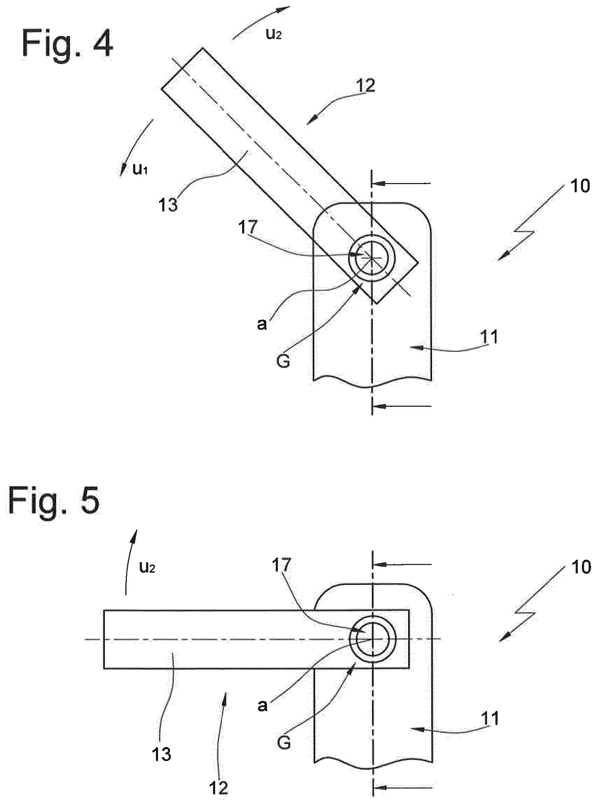

In den Fig. 3 bis 10 ist der Tragarm 13 der Armauflage 12 ohne ein Polster 37 dargestellt. Aus der oberen Endposition (siehe Fig. 3) ist der Tragarm 13 in Richtung u1 entgegen der unteren Endposition bewegbar. Aus der unteren Endposition ist der Tragarm 13 in Richtung u2 entgegen der oberen Endposition bewegbar. In Fig. 4 ist eine Zwischenposition zwischen der oberen Endposition und der unteren Endposition dargestellt.

Der Tragarm 13 bildet mit der Basis 11 ein Gelenk G. Er umfasst einen freien, von dem Gelenk G entfernten Endbereich 14 und einen Endbereich 15 nahe des Gelenks G. Die Schwenkachse a wird im vorliegenden Ausführungsbeispiel von einem Stift 16 gebildet, auf welchem der Tragarm 13 in die Richtungen u1 und u2 drehbewegbar und in die Richtungen y1 und y2 axial bewegbar gelagert ist.

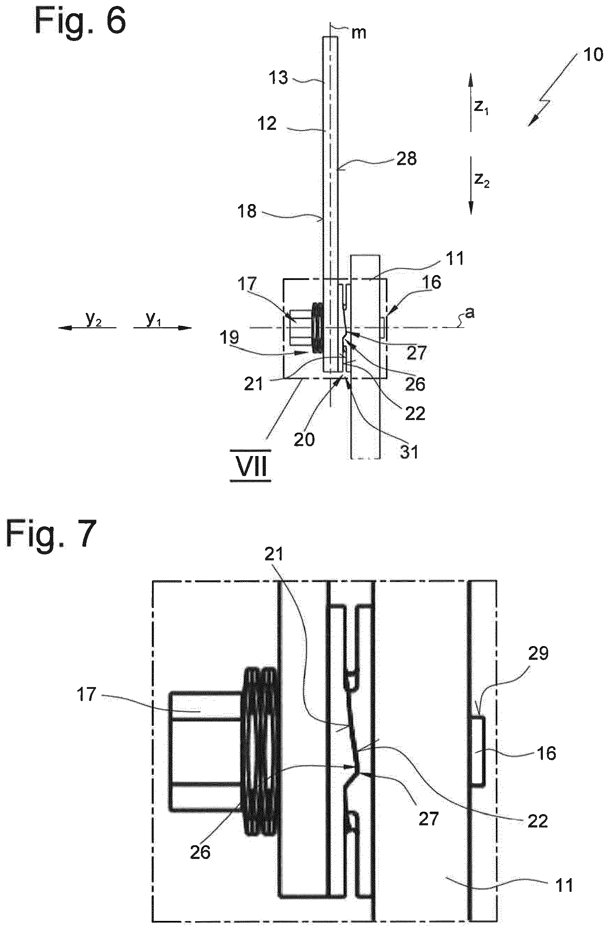

Die Armauflage 12 wird bei der Bewegung von der oberen Endposition in die untere Endposition von einer Bremsvorrichtung 20 gebremst. Die Bremsvorrichtung 20 umfasst eine der Basis 11 zugeordnete erste Gleitstruktur 23 mit Gleitflächen 21 (siehe Fig. 6) und eine der Armauflage 12 zugeordnete zweite Gleitstruktur 25 mit Gleitflächen 22. Zwischen einem Kopf 17 des Stiftes 16 und einer Außenfläche 18 des Tragarms 13 ist eine Federvorrichtung 19 mit mehreren Tellerfedern auf dem Stift 16 angeordnet. Die Federvorrichtung 19 ist Bestandteil der Bremsvorrichtung 20.

In Fig. 6 ist zu erkennen, dass an dem Tragarm 13 ein Gegenelement und an der Basis 11 ein Gleitelement befestigt ist. Das Gegenelement mit der Gleitfläche 22 ist fest an einer Außenfläche 28 des Tragarms 13 und das Gleitelement mit der Gleitfläche 21 ist fest mit der Basis 11 verbunden. Bei der Bewegung des Tragarms 13 bzw. der Armauflage 12 in die Richtungen u1 und u2 dreht die Gleitfläche 22 daher relativ zu der Gleitfläche 21 in die Richtungen u1 und u2. Die Gleitflächen 21 und 22 stehen in Kontakt.

Die Federvorrichtung 19 presst in Richtung y1 gegen die Außenfläche 18 des Tragarms 13 und belastet damit die Gleitflächen 21 und 22 gegeneinander.

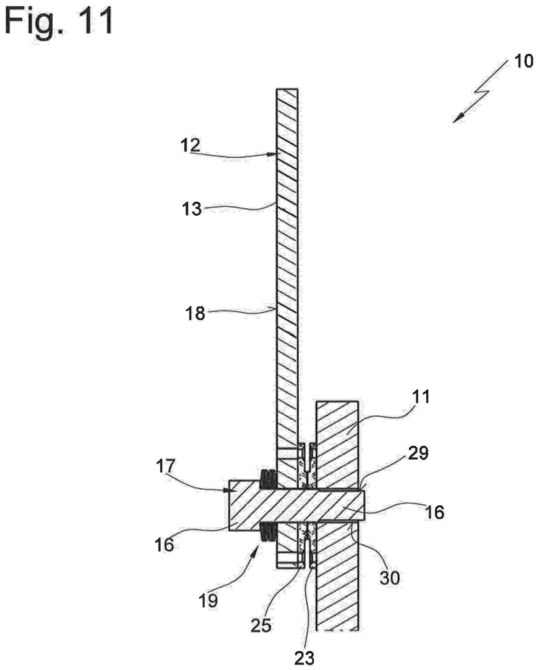

Der Stift 16 ist mit einem Außengewinde 29 versehen, welches mit einem Innengewinde 30 der Basis 11 verschraubt ist (lediglich in Fig. 11 erkennbar). Indem der Stift 16 in Richtung y1 eingeschraubt oder in Richtung y2 herausgeschraubt wird, kann die Vorspannung der Federvorrichtung 19 und damit die Gleitkraft erhöht bzw. verringert werden.

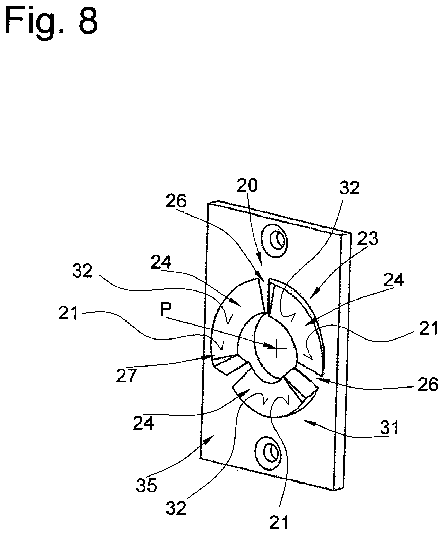

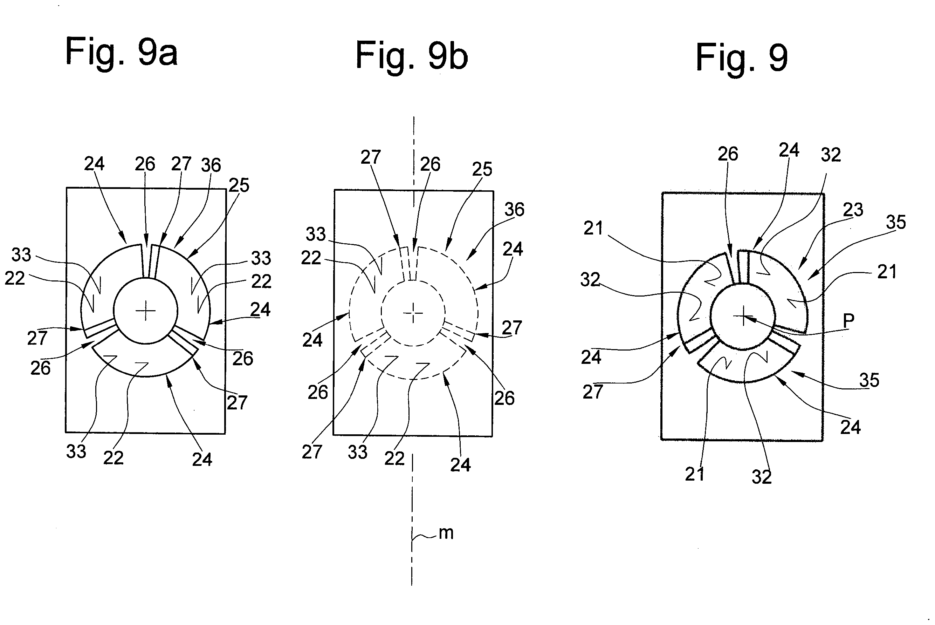

In den Fig. 8 und 9 ist das Gleitelement mit der Gleitstruktur 23 mit den Gleitflächen 21 vergrößert dargestellt. Die Gleitstruktur 23 ist grundsätzlich entsprechend der Gleitstruktur 25 gemäß Fig. 9a ausgebildet, welches die Gleitflächen 22 aufweist. Wenn man berücksichtigt, dass die Gleitstrukturen 23 und 25 einander zugewandt sind, ist bei einem Vergleich der Fig. 9 und 9b zu erkennen, dass sich die Gleitflächen 21 gegen den Uhrzeigersinn aus einer Ebene bzw. einem Nullniveau 26 zu einer Rampe ansteigen, während die Gleitflächen 22 im Uhrzeigersinn aus dem Nullniveau 26 zu einer Rampe ansteigen. In den Fig. 9 und 9b sind die Reibstrukturen 23 und 25 entsprechend ihrer Stellung angeordnet, wenn die Armauflage sich in der oberen Endposition befindet.

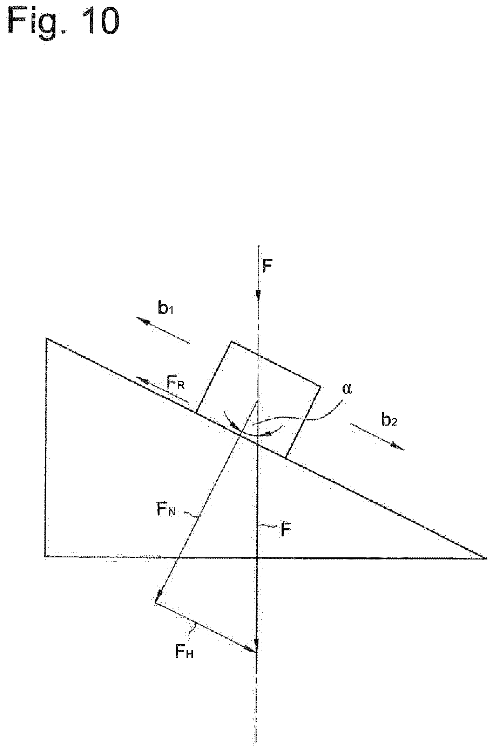

Die Erfindung macht sich das Prinzip zunutze (siehe Fig. 10), dass eine Kraft die unter einem Winkel α zu der Flächennormale gerichtet auf eine Fläche auftrifft, zerlegt werden kann in eine Normalkraft (FN) und eine parallel zu der Fläche gerichtete Kraft, die im Folgenden als Hangabtriebskraft (FH) bezeichnet wird. Bei der Bewegung eines Körpers in Richtung b1 wirkt die Kraft FH der Bewegung entgegen. Bei der Bewegung des Körpers in Richtung b2 unterstützt die Kraft FH die Bewegung.

In dem vorliegenden Ausführungsbeispiel wird das Prinzip derart genutzt, dass sich der Vorsprung 27 bei der Bewegung der Armauflage 12 in Schwenkrichtung u1 die Rampe 24 hinaufbewegt, wobei die Armauflage 12 von der Hangabtriebskraft FH gebremst wird. Bei einer Bewegung der Armauflage 12 in Richtung u2 bewegt sich der Vorsprung 27 die Rampe 24 hinab. Die Bewegung der Armauflage 12 wird dabei von der Hangabtriebskraft FH unterstützt.

Die Bremsvorrichtung 20 umfasst eine Steuervorrichtung 31 zur Steuerung der Reibkraft, welche eine erste Steuerstruktur und eine zweite Steuerstruktur umfasst. Im vorliegenden Ausführungsbeispiel sind die Gleitflächen 21 identisch mit Steuerflächen 32 einer Steuerstruktur 35 und die Gleitflächen 22 sind identisch mit Steuerflächen 33 einer Steuerstruktur 36. Mit anderen Worten, die Gleitflächen sind zugleich die Steuerflächen. Jede der Steuerstrukturen 35 und 36 weist somit auch drei Steuerflächen 32 bzw. 33 auf. Die Steuerflächen 32 sind koaxial zu einem Mittelpunkt P ausgebildet.

Jede der Steuerflächen 32 und 33 bzw. der Gleitflächen 21 und 22 umfasst einen Bereich auf einem Nullniveau 26, einen Bereich, der als Rampe 24 ausgebildet ist und einen Bereich maximaler Erhebung, welcher als Vorsprung 27 bezeichnet ist. Die Rampe 24 und der Vorsprung 27 der Gleitstruktur 23 erstrecken sich bezüglich des Nullniveaus 26 in Richtung y2. Die Rampe 24 und der Vorsprung 27 der Gleitstruktur 25 erstrecken sich bezüglich des Nullniveaus 26 in Richtung y1. Das Nullniveau 26 ist die Ebene, von welcher sich die Erhebung erstreckt. Zwischen dem Vorsprung 27 und dem Nullniveau 26 ist ein Abstand I ausgebildet.

Wie in Fig. 6 zu erkennen ist, sind in der oberen Endposition des Tragarms 13 die Gleitstrukturen 23 und 25 derart angeordnet, dass die Vorsprünge 27 einer Gleitstruktur gegenüber den Nullniveaus 26 der anderen Gleitstruktur angeordnet sind. Mit anderen Worten, die Vorsprünge 27 und die Nullniveaus 26 der Gleitflächen 21 und 22 sind geschachtelt angeordnet. Dies entspricht dem oben erwähnten ersten Bereich der Schwenkbewegung der Armauflage. Diese Anordnung ist in Fig. 6 zu erkennen und lässt sich nachvollziehen, indem man sich die Gleitstrukturen 23 und 25 der Fig. 9 und 9b übereinandergelegt vorstellt.

Wenn der Tragarm 13 aus der oberen Endposition in Richtung u1 geschwenkt wird, bewegen sich die Vorsprünge 27 der Gleitflächen 21 bergauf auf die Rampen 24 der Gleitflächen 22. Die Vorsprünge 27 der Gleitflächen 22 bewegen sich bergauf auf die Rampen 24 der Gleitflächen 21. Dies entspricht dem oben erwähnten zweiten Bereich der Schwenkbewegung der Armauflage 12. Dabei werden die Gleitstruktur 25 und der Tragarm 13 axial in Richtung y2 verlagert. Der Tragarm 13 ist Stellelement im Sinne der Erfindung.

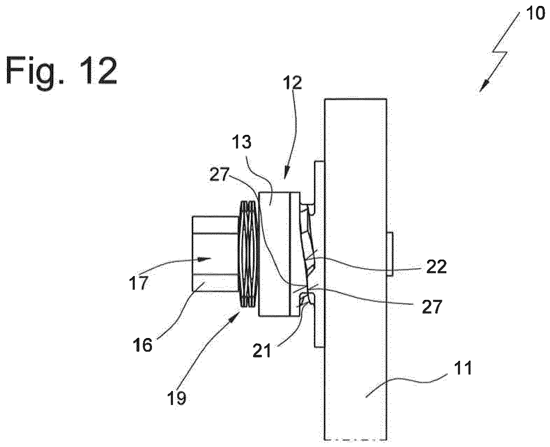

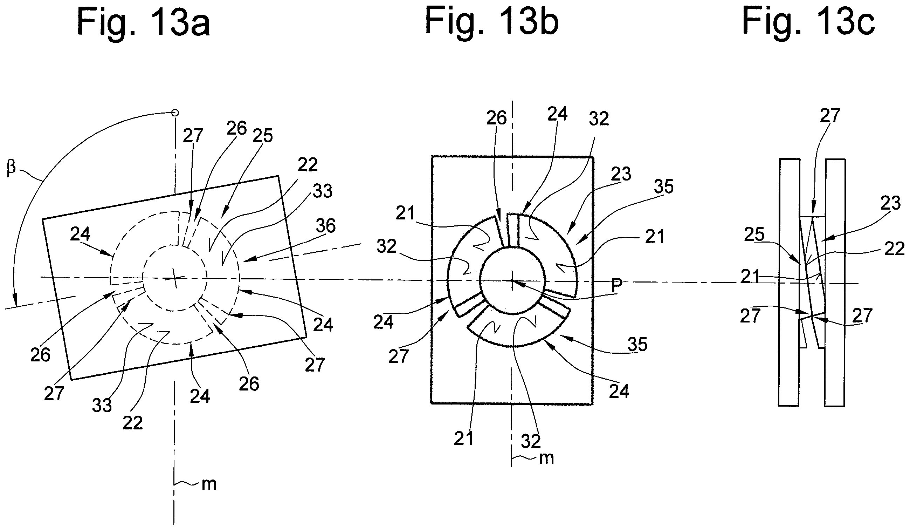

Wenn der Tragarm 13 aus der oberen Endposition um den Winkel β geschwenkt wurde, so dass er in der unteren Endposition angeordnet ist, stehen sich, wie in Fig. 12 zu sehen, die Vorsprünge 27 der Gleitstrukturen 23 und 25 gegenüber. Dies entspricht dem oben erwähnten dritten Bereich der Schwenkbewegung der Armauflage 12. Die Gleitstruktur 25 ist dann bezüglich der oberen Endposition um den Abstand 2l maximal in Richtung y2 verlagert. Diese Position ist in den Fig. 12 und 13c dargestellt und lässt sich nachvollziehen, indem man sich die Gleitstrukturen 23 und 25 der Fig. 13a und 13b übereinandergelegt vorstellt. Während die der Basis 11 zugeordneten Gleitstrukturen 23 ihre Position gemäß Fig. 13b nicht verändert haben, haben sich die Gleitstrukturen 25 gemäß Fig. 13a um den Winkel β gedreht.

Es wird deutlich, dass bei der Bewegung des Tragarms 13 aus der oberen Endposition in Richtung u1 aufgrund der Bewegung der Vorsprünge 27 einer Gleitstruktur auf die Rampen 24 einer anderen Gleitstruktur die Gleitkraft ansteigt. Ein Anstieg der Reibkraft würde - anders als bei dem vorliegenden Ausführungsbeispiel - auch auftreten, wenn die Federkraft konstant wäre.

Bei dem vorliegenden Ausführungsbeispiel steigt, während sich die Vorsprünge auf den Rampen befinden, aufgrund der Verlagerung des Tragarms 13 in Richtung y2 die Federkraft zusätzlich an, wodurch auch die Reibkraft zwischen den sich kontaktierenden Gleitflächen 21 und 22 kontinuierlich ansteigt. Dabei wird die Bewegung der Armauflage 12 in Richtung u1 zunehmend durch die Erhöhung der Normalkraft gebremst. Die Armauflage 12 bewegt sich also gebremst in die untere Endposition. Dies kompensiert zumindest teilweise den mit zunehmendem Schwenkwinkel in Richtung u1 wirksamen Anteil der Gewichtskraft der Armauflage12.

Gemäß einem alternativen Ausführungsbeispiel könnte die Federvorrichtung 19 derart ausgebildet sein, dass die Zunahme der Federkraft wegen der Verlagerung des Tragarms 13 vernachlässigbar ist. In diesem Fall würde die Reibkraft sprunghaft ansteigen, wenn sich die Vorsprünge 27 auf die Rampen 24 bewegen.

Wird die Armauflage 12 in umgekehrte Richtung u2 geschwenkt, bewegen sich die die Vorsprünge 27 einer Gleitstruktur bergab auf den Rampen 24 einer anderen Gleitstruktur. Die Hangabtriebskraft unterstützt nun die Bewegung der Armauflage 12 in Richtung u2, d.h. sie wirkt in dieselbe Richtung wie die zur Bewegung der Armauflage 12 aufzubringende Kraft. Weil sich der Tragarm 13 in Richtung y1 bewegt, verringert sich der Federweg und damit die Federkraft. Die Reibkraft wird dadurch reduziert.

Die Gleitstrukturen 23 und 25 können alternativ auch derart ausgebildet sein, dass sich die Vorsprünge 27 erst nachdem die Armauflage 12 von der oberen Endposition um einen definierten Schwenkwinkel in Richtung u1 geschwenkt wurde, auf die Rampen 24 bewegen. Die Erhöhung der Reibkraft beginnt in diesem Fall erst nach Durchführung der Schwenkbewegung um den definierten Schwenkwinkel.

## Patentansprüche

1. Ausstattungsvorrichtung (10) für einen Fahrzeuginnenraum
mit einer Basis (11) und mit einem schwenkbaren Teil, das relativ zu der Basis (11) um eine Schwenkachse (a) zwischen einer etwa vertikalen ersten Position, und einer etwa horizontalen zweiten Position schwenkbar ist, **wobei** die Ausstattungsvorrichtung eine Vorrichtung umfasst, mit einer der Basis (11) zugeordneten ersten Gleitstruktur mit wenigstens einer ersten Gleitfläche (21) und einer dem schwenkbaren Teil zugeordneten zweiten Gleitstruktur mit wenigstens einer zweiten Gleitfläche (22), dass die zweite Gleitfläche mit dem schwenkbaren Teil bewegungsverbunden ist, und wobei die erste Gleitfläche (21) und / oder die zweite Gleitfläche (22) wenigstens teilweise als Rampe (24) ausgebildet ist, dass wenigstens eine Gleitfläche (21, 22) einen Vorsprung (27) umfasst, der mit einer Gleitfläche (21, 22) der anderen Gleitstruktur (23, 25) in Kontakt steht und dass die erste Gleitfläche (21) und / oder die zweite Gleitfläche (22) eine Gleitbahn bildet, wobei die Vorrichtung eine Federvorrichtung (19) umfasst, welche die erste Gleitfläche (21) und die zweite Gleitfläche (22) gegeneinander belastet, **dadurch gekennzeichnet, dass** die Gleitbahn während der Bewegung des schwenkbaren Teils zwischen der ersten Position und der zweiten Position von dem Vorsprung (27) der jeweils anderen Gleitstruktur (23, 25) abgefahren wird, dass die Vorrichtung als Bremsvorrichtung (20) ausgebildet ist, wobei in einem Bereich der Bewegung des schwenkbaren Teils der Vorsprung wenigstens einer Gleitfläche einer Gleitstruktur eine Rampe wenigstens einer Gleitfläche der anderen Gleitstruktur als Bremse kontaktiert.

2. Ausstattungsvorrichtung nach Anspruch 1, **dadurch gekennzeichnet, dass** die erste Gleitstruktur (23) und / oder die zweite Gleitstruktur (25) wenigstens zwei Gleitflächen (21, 22) umfasst.

3. Ausstattungsvorrichtung nach einem der vorangehenden Ansprüche, **dadurch gekennzeichnet, dass** wenigstens eine der Gleitflächen (21, 22) wenigstens einen bezüglich einem Nullniveau (26) vorragenden Vorsprung (27) umfasst.

4. Ausstattungsvorrichtung nach einem der vorangehenden Ansprüche, **dadurch gekennzeichnet, dass** sich in einem Bereich der Bewegung des schwenkbaren Teils wenigstens ein Vorsprung (27) der ersten Gleitfläche (21) und wenigstens ein Nullniveau der zweiten Gleitfläche (22) und / oder wenigstens ein Vorsprung (27) der zweiten Gleitfläche (22) und wenigstens ein Nullniveau (26) der ersten Gleitfläche (21) kontaktieren.

5. Ausstattungsvorrichtung nach einem der vorangehenden Ansprüche,
**dadurch gekennzeichnet, dass** sich in einem Bereich der Bewegung des schwenkbaren Teils wenigstens ein Vorsprung (27) der ersten Gleitfläche (21) und wenigstens eine Rampe (24) der zweiten Gleitfläche (22) und / oder wenigstens ein Vorsprung (27) der zweiten Gleitfläche (22) und wenigstens eine Rampe (24) der ersten Gleitfläche (21) kontaktieren.

6. Ausstattungsvorrichtung nach einem der vorangehenden Ansprüche,
**dadurch gekennzeichnet, dass** sich in einem Bereich der Bewegung des schwenkbaren Teils die Vorsprünge (27) der ersten Gleitfläche (21) und der zweiten Gleitfläche (22) kontaktieren.

7. Ausstattungsvorrichtung nach einem der vorangehenden Ansprüche, **dadurch gekennzeichnet, dass** eine Steuervorrichtung (31) zur Steuerung der zwischen den Gleitflächen (21, 22) wirkenden Normalkraft vorgesehen ist, mit wenigstens einer axial verschiebbaren mit dem schwenkbaren Teil drehverbundenen ersten Steuerstruktur (36) mit wenigstens einer ersten Steuerfläche (33) und einer relativ zu der Basis (11) drehfesten zweiten Steuerstruktur (35) mit wenigstens einer zweiten Steuerfläche (32), die mit der ersten Steuerfläche (33) zusammenwirkt.

8. Ausstattungsvorrichtung nach Anspruch 7, **dadurch gekennzeichnet, dass** die erste Gleitfläche (21) wenigstens teilweise die erste Steuerfläche (32) und die zweite Gleitfläche (22) wenigstens teilweise die zweite Steuerfläche (33) bildet.

9. Ausstattungsvorrichtung nach einem der Ansprüche 7 oder 8, **dadurch gekennzeichnet, dass** die erste Steuerstruktur (35) oder die zweite Steuerstruktur (36) einem Stellelement zum Verstellen des Federwegs der Federvorrichtung (19) zugeordnet ist.

10. Ausstattungsvorrichtung nach Anspruch 9, **dadurch gekennzeichnet, dass** das Stellelement von dem schwenkbaren Teil gebildet ist.

11. Ausstattungsvorrichtung nach einem der vorangehenden Ansprüche, **dadurch gekennzeichnet, dass** die Gleitflächen (21, 22) koaxial zu der Schwenkachse (a) angeordnet sind.

12. Ausstattungsvorrichtung nach einem der vorangehenden Ansprüche, **dadurch gekennzeichnet, dass** die Ausstattungsvorrichtung eine Armlehne (10) bildet, wobei das schwenkbare Teil eine zwischen einer etwa vertikalen Position und einer etwa horizontalen Position schwenkbare Armauflage (12) ist.

13. Verwendung einer Vorrichtung für ein Ausstattungsteil eines Fahrzeuginnenraums mit einer Basis und einem schwenkbaren Teil, mit einer der Basis zugeordneten ersten Gleitstruktur mit wenigstens einer ersten Gleitfläche (21) und mit einer dem schwenkbaren Teil zugeordneten zweiten Gleitstruktur mit wenigstens einer zweiten Gleitfläche (22), welche mit der ersten Gleitfläche (21) in Kontakt steht und wobei sich in einem Bereich der Bewegung des schwenkbaren Teils (12) wenigstens ein Vorsprung (27) der ersten Gleitfläche (21) und wenigstens eine Rampe (24) der zweiten Gleitfläche (32) und / oder wenigstens ein Vorsprung (27) der zweiten Gleitfläche (22) und wenigstens eine Rampe (24) der ersten Gleitfläche (21) kontaktieren, **dadurch gekennzeichnet, dass** die Vorrichtung eine Bremsvorrichtung bildet, wobei in einem Bereich der Bewegung des schwenkbaren Teils zwischen einer etwa vertikalen ersten Position und einer etwa horizontalen zweiten Position der Vorsprung wenigstens einer Gleitfläche einer Gleitstruktur eine Rampe wenigstens einer Gleitfläche der anderen Gleitstruktur als Bremse kontaktiert.

## Claims

1. Fitting device (10) for a vehicle interior, comprising a base (11) and a pivotable part pivotable relative to the base (11) about a pivot axis (a) between a roughly vertical first position and a roughly horizontal second position, **wherein** the fitting device comprises a device, with a first sliding structure assigned to the base (11) having at least one first sliding surface (21) and a second sliding structure assigned to the pivotable part having at least one second sliding surface (22), in that the second sliding surface is connected in its movement to the pivotable part and wherein the first sliding surface (21) and/or the second sliding surface (22) is formed at least partially as a ramp (24), in that at least one sliding surface (21, 22) comprises a projection (27) which is in contact with a sliding surface (21, 22) of the other sliding structure (23, 25) and in that the first sliding surface (21) and/or the second sliding surface (22) forms a sliding track, wherein the device comprises a spring device (19) which loads the first sliding surface (21) and the second sliding surface (22) against one another, **characterised in that** during the movement of the pivotable part between the first position and the second position the sliding track is travelled by the projection (27) of the respectively other sliding structure (23, 25), **in that** the device is formed as a brake device (20), wherein in a region of the movement of the pivotable part, the projection of at least one sliding surface of a sliding structure contacts a ramp of at least one sliding surface of the other sliding structure as a brake.

2. Fitting device according to claim 1, **characterised in that** the first sliding structure (23) and/or the second sliding structure (25) comprises at least two sliding surfaces (21, 22).

3. Fitting device according to any one of the preceding claims, **characterised in that** at least one of the sliding surfaces (21, 22) comprises at least one projection (27) that projects in relation to a zero level (26).

4. Fitting device according to any one of the preceding claims, **characterised in that** in a region of the movement of the pivotable part, at least one projection (27) of the first sliding surface (21) and at least one zero level of the second sliding surface (22) and/or at least one projection (27) of the second sliding surface (22) and at least one zero level (26) of the first sliding surface (21) are in contact with one another.

5. Fitting device according to any one of the preceding claims, **characterised in that** in a region of the movement of the pivotable part, at least one projection (27) of the first sliding surface (21) and at least one ramp (24) of the second sliding surface (22) and/or at least one projection (27) of the second sliding surface (22) and at least one ramp (24) of the first sliding surface (21) are in contact with one another.

6. Fitting device according to any one of the preceding claims, **characterised in that** in a region of the movement of the pivotable part, the projections (27) of the first sliding surface (21) and of the second sliding surface (22) are in contact with one another.

7. Fitting device according to any one of the preceding claims, **characterised in that** a control device (31) is provided for controlling the normal force acting between the sliding surfaces (21, 22), with at least one axially displaceable first control structure (36) that is rotationally connected to the pivotable part having at least one first control surface (33) and a second control structure (35) that is rotationally fixed relative to the base (11) having at least one second control surface (32), which cooperates with the first control surface (33).

8. Fitting device according to claim 7, **characterised in that** the first sliding surface (21) forms at least partially the first control surface (32) and the second sliding surface (22) forms at least partially the second control surface (33).

9. Fitting device according to any one of claims 7 or 8, **characterised in that** the first control structure (35) or the second control structure (36) is assigned to an actuating element to adjust the spring path of the spring device (19).

10. Fitting device according to claim 9, **characterised in that** the actuating element is formed by the pivotable part.

11. Fitting device according to any one of the preceding claims, **characterised in that** the sliding surfaces (21, 22) are arranged coaxially to the pivot axis (a).

12. Fitting device according to any one of the preceding claims, **characterised in that** the fitting device forms an arm rest (10), wherein the pivotable part is an arm support (12) pivotable between a roughly vertical position and a roughly horizontal position.

13. Use of a device for a fitting part of a vehicle interior having a base and a pivotable part with a first sliding structure assigned to the base having at least one first sliding surface (21) and a second sliding structure assigned to the pivotable part having at least one second sliding surface (22), which is in contact with the first sliding surface (21) and wherein in a region of the movement of the pivotable part (12), at least one projection (27) of the first sliding surface (21) and at least one ramp (24) of the second sliding surface (32) and/or at least one projection (27) of the second sliding surface (22) and at least one ramp (24) of the first sliding surface (21) are in contact with one another, **characterised in that** the device forms a brake device, wherein in a region of the movement of the pivotable part between a roughly vertical first position and a roughly horizontal second position, the projection of at least one sliding surface of a sliding structure contacts a ramp of at least one sliding surface of the other sliding structure as a brake.

## Revendications

1. Elément d'équipement (10) pour un habitacle de véhicule avec un élément de base (11) et avec un élément pivotant qui peut pivoter par rapport à l'élément de base (11) autour d'un axe de pivotement (a) entre une première position sensiblement verticale et une deuxième position sensiblement horizontale, **lequel** élément d'équipement comprend un dispositif avec une première structure de glissement associée à l'élément de base (11) avec au moins une première surface de glissement (21) et une deuxième structure de glissement associée à l'élément pivotant avec au moins une deuxième surface de glissement (22), la deuxième surface de glissement étant solidaire du déplacement de l'élément pivotant, et la première surface de glissement (21) et/ou la deuxième surface de glissement (22) étant configurées au moins partiellement comme une rampe (24), au moins une surface de glissement (21, 22) comprenant une saillie (27) qui est en contact avec la surface de glissement (21, 22) de l'autre structure de glissement (23, 25) et la première surface de glissement (21) et/ou la deuxième surface de glissement (22) formant une glissière, le dispositif comprenant un dispositif de ressort (19) qui appuie la première surface de glissement (21) et la deuxième surface de glissement (22) l'une contre l'autre, **caractérisé en ce que** la glissière est parcourue pendant le déplacement de l'élément pivotant entre la première position et la deuxième position par la saillie (27) de l'autre structure de glissement (23, 25), que le dispositif est configuré comme un dispositif de freinage (20), la saillie d'au moins une surface de glissement d'une structure de glissement étant en contact, sur une plage de déplacement de l'élément pivotant, avec une rampe d'au moins une surface de glissement de l'autre structure de glissement, faisant office de frein.

2. Dispositif d'équipement selon la revendication 1, **caractérisé en ce que** la première structure de glissement (23) et/ou la deuxième structure de glissement (25) comprennent au moins deux surfaces de glissement (21, 22).

3. Dispositif d'équipement selon une des revendications précédentes, **caractérisé en ce qu'**au moins une des surfaces de glissement (21, 22) comprend au moins une saillie (27) saillant par rapport à un niveau zéro (26).

4. Dispositif d'équipement selon une des revendications précédentes, **caractérisé en ce que**, sur une plage de déplacement de l'élément pivotant, au moins une saillie (27) de la première surface de glissement (21) et au moins un niveau zéro de la deuxième surface de glissement (22) et/ou au moins une saillie (27) de la deuxième surface de glissement (22) et au moins un niveau zéro (26) de la première surface de glissement (21) sont en contact.

5. Dispositif d'équipement selon une des revendications précédentes, **caractérisé en ce que**, sur une plage de déplacement de l'élément pivotant, au moins une saillie (27) de la première surface de glissement (21) et au moins une rampe (24) de la deuxième surface de glissement (22) et/ou au moins une saillie (27) de la deuxième surface de glissement (22) et au moins une rampe (24) de la première surface de glissement (21) sont en contact.

6. Dispositif d'équipement selon une des revendications précédentes, **caractérisé en ce que**, sur une plage de déplacement de l'élément pivotant, les saillies (27) de la première surface de glissement (21) et de la deuxième surface de glissement (22) sont en contact.

7. Dispositif d'équipement selon une des revendications précédentes, **caractérisé en ce qu'**il est prévu un dispositif de contrôle (31) pour contrôler la force normale agissant entre les surfaces de glissement (21, 22), avec au moins une première structure de contrôle (36) pouvant se déplacer axialement et solidaire en rotation avec l'élément pivotant dotée d'une première surface de contrôle (33), et une deuxième structure de contrôle (35) solidaire en rotation par rapport à l'élément de base (11) dotée d'au moins une deuxième surface de contrôle (32) qui interagit avec la première surface de contrôle (33).

8. Dispositif d'équipement selon la revendication 7, **caractérisé en ce que** la première surface de glissement (21) forme au moins partiellement la première surface de contrôle (32) et la deuxième surface de glissement (22) au moins partiellement la deuxième surface de contrôle (33).

9. Dispositif d'équipement selon une des revendications 7 ou 8, **caractérisé en ce que** la première structure de contrôle (35) ou la deuxième structure de contrôle (36) est associée à un élément de réglage pour régler la course de ressort du dispositif de ressort (19).

10. Dispositif d'équipement selon la revendication 9, **caractérisé en ce que** l'élément de réglage est formé par l'élément pivotant.

11. Dispositif d'équipement selon une des revendications précédentes, **caractérisé en ce que** les surfaces de glissement (21, 22) sont disposées de façon coaxiale par rapport à l'axe de pivotement (a).

12. Dispositif d'équipement selon une des revendications précédentes, **caractérisé en ce que** le dispositif d'équipement forme un accoudoir (10) dans lequel l'élément pivotant est un repose-bras (12) pouvant pivoter entre une position sensiblement verticale et une position sensiblement horizontale.

13. Utilisation d'un dispositif pour un élément d'équipement d'un habitacle de véhicule avec un élément de base et un élément pivotant, avec une première structure de glissement associée à l'élément de base dotée d'au moins une première surface de glissement (21) et avec une deuxième structure de glissement associée à l'élément coulissant dotée d'au moins une deuxième surface de glissement (22) qui est en contact avec la première surface de glissement (21), et dans lequel, sur une plage de déplacement de l'élément pivotant (12), au moins une saillie (27) de la première surface de glissement (21) et au moins une rampe (24) de la deuxième surface de glissement (22) et/ou au moins une saillie (27) de la deuxième surface de glissement (22) et au moins une rampe (24) de la première surface de glissement (21) sont en contact, **caractérisée en ce que** le dispositif forme un dispositif de freinage, la saillie d'au moins une surface de glissement d'une structure de glissement étant en contact, sur une plage de déplacement de l'élément pivotant entre une première position sensiblement verticale et une deuxième position sensiblement horizontale, avec une rampe d'au moins une surface de glissement de l'autre structure de glissement, faisant office de frein.
